# EUROPEAN PATENT APPLICATION

(11) **EP 1 402 935 A1**
(43) Date of publication of application: **31.03.2004**
(21) Application number: 02078944.2
(22) Date of filing: 20.09.2002
(51) Int. Cl.: B01D 53/04, F01N 11/00, B60H 3/06

(54) **Filter diagnostics method and arrangement**

(71) Applicant: Ford Global Technologies, Inc., Dearborn, Michigan 48126-2490 (US)
(72) Inventor: Karlsson Jan, 417 26Göteborg (SV); Alleving Peter, 441 40 Alingsas (SV)
(74) Representative: Mossmark, Anders

(57) **Abstract**

A method and an arrangement are disclosed for monitoring the operational status of an apparatus for adsorbing pollutants from a source of polluted gas and desorbing said pollutants to an internal combustion engine (1). The arrangement includes a number of sensors, such as a sensor (P₁) for measuring pollution concentration in the gas is positioned upstream of a filter (8, 24) (8), and a sensor (P₁, P₂) for measuring pollution concentration in the desorbed gas is positioned downstream of the filter (8, 24). A central processing unit (C₁) is arranged to use signals from said pollution sensors for monitoring the adsorption of pollutants in the filter (8, 24), to initiate a desorption cycle before the filter (8, 24) becomes saturated, to monitor the desorption of pollutants from the filter (8, 24) and to generate an error signal if a desorbed amount exceeds an adsorbed amount.

## Description

### TECHNICAL FIELD

The current invention relates to a method and an arrangement for monitoring an apparatus for removing harmful pollutants, such as hydrocarbons compounds, from a source of gas, such as ambient air, by means of an adsorption unit arranged in a vehicle provided with a combustion engine and a ventilation system.

### BACKGROUND ART

The development of new internal combustion engines for vehicles has mainly been directed towards increasing the efficiency of the engines, in order to reduce the amount of harmful emissions. Catalytic converters are widely used for reducing the amount of pollutants in exhaust gases. In this context it is also known to arrange hydrocarbon-adsorbing means, such as a zeolite, between the exhaust manifold and the catalytic converter, in order to contain hydrocarbons until the converter has reached its light-off temperature. Combined electric and combustion engines, also known as hybrid engines, can also be used for reducing the amount of exhaust emissions. All such measures are however only aimed at reducing the emissions created by the vehicle itself.

In the following text, the term "hydrocarbons" denotes a group of chemical compounds of carbon and hydrogen in gaseous form generally known as Non-Methane Organic Gas (NMOG). This is a mixture of any gaseous hydrocarbons and any oxygenated hydrocarbons, except methane. NMOG means the sum of non-oxygenated and oxygenated hydrocarbons contained in a gas sample as measured in accordance with the "California Non-Methane Organic Gas Test Procedures". Hydrocarbons in this form can be the result of incomplete combustion in an internal combustion engine, the exhausts of which have been emitted to the atmosphere.

Recent methods have instead been aimed at purifying ambient air and polluted air from other vehicles. US 6200542 discloses a method for breaking down toxic substances such as ozone. At ground level, ozone is formed through photosynthesis of hydrocarbons and nitrous oxides. This creates the haze commonly known as smog, which forms when exhaust gases from combustion engines and other sources are exposed to sunlight. According to the known method, a catalytic coating is applied to the radiator and other surfaces in the engine compartment. When the ozone comes into contact with these surfaces it is converted to oxygen.

A further known method, described in EP 1082990, uses an HC trap adjacent to the radiator for adsorbing pollutants from the ambient air while the vehicle is moving. The adsorbing process is followed by desorption by passing heated intake air through the trap to an intake conduit of the engine. This arrangement is operated when the vehicle is moving.

However, none of the known methods disclose methods or arrangements for monitoring the function of or performing diagnostic tests on such equipment. This is required in order to ensure proper function and to warn the user if a malfunction should occur. A solution to the problem of diagnosing an arrangement for removing harmful pollutants from a source of gas, such as ambient air, is solved by the invention.

### DISCLOSURE OF INVENTION

The problem of monitoring operational status of an apparatus for adsorbing pollutants is solved by a method and an arrangement as claimed in claims 1 and 25 and their dependent claims.

The invention relates to a method for monitoring operational status of an apparatus for adsorbing pollutants from a source of polluted gas and desorbing said pollutants to an internal combustion engine. A basic embodiment of the invention involves the following steps:
- an accumulated amount of pollutants adsorbed in a filter in an adsorbing mode is compared to a theoretical capacity of the filter,
- a desorption mode is initiated when the accumulated amount is near or equal to a predetermined degree of the theoretical capacity,
- an accumulated amount of pollutants desorbed from the filter in the desorbing mode is compared to the accumulated adsorbed amount,
- an error signal is generated if the accumulated desorbed amount differs significantly from the accumulated adsorbed amount.

Alternatively, an error signal may also be generated if a pollution release curve from the filter is abnormal, that is, if the variation of pollution concentration in the released gas over time differs from expected values.

In the above and the following examples, the term "theoretical capacity" is used to represent a calculated experience value of the adsorption capacity. The general behaviour of the filter under different conditions, as well as its gradual deterioration over time is known from experience and extensive testing. The central processing unit uses a representation of the known behaviour of the filter over time, combined with measured and/or calculated values to determine the current theoretical capacity of the filter.

An upstream, first sensor gives a measured value of pollutant concentration from in the polluted gas. This value and a measured or calculated value of air mass flow drawn through the arrangement over a period of time are used to calculate the accumulated amount of pollutants adsorbed in the filter. Similarly, a downstream, second sensor gives a measured value of pollutant concentration in the desorbed gas. This value and a measured or calculated value of air mass flow over time are used to determine the amount of pollutant desorbed from the filter.

One reason for filling the filter to a predetermined degree of the filter is that it may be necessary to have spare capacity in case desorption is not possible at the time it is requested by the central processing unit. Said predetermined degree may be selected within a range dependent on the expected usage of the vehicle, on local pollution conditions, filter size, etc. For instance, if a vehicle is expected to be parked over extended periods it may require a relatively large spare capacity, while a taxi that is driven more or less continuously will require a relatively small spare capacity. Hence the degree of filling may be selected within a range of, for instance, 30-90% of the total theoretical capacity.

A central processing unit is supplied with output signals from a number of sensors and performs a number of diagnostic tests during each step, based on said output signals to determine the operational status of the apparatus, whereby an error signal is generated if a component part does not comply with a set of predetermined conditions after at least one diagnostic test. The reason for performing multiple tests before generating an error signal is that it is desirable to avoid false alarms caused by a single non-repeated event. However, if a component part should trigger several such ignored alarms over a period of time, an error signal will be generated by the central processing unit.

The central processing unit may be arranged to generate error signals for a multitude of different faults, indicating a malfunctioning sensor, filter or mechanical/electrical faults in other component parts such as controllable valves and fans. A number of examples of such errors are listed below.

An additional desorption cycle may be initiated before the filter is filled if the measured value of pollutant concentration upstream of the filter is zero over a predetermined period of time, whereby a pollution sensor upstream of the filter during the adsorption mode is assumed to malfunction if the desorbed amount of pollutants exceeds the accumulated amount. The function of the downstream sensor may also be monitored by the central processing unit, as the desorbed pollutants may influence the air/fuel ratio and thereby the value of the air factor λ. Unexpected changes, or lack of change, in the air factor λ during a desorption cycle may also cause an error signal to be generated.

Measured values of pollutant concentration upstream and downstream of the filter are compared during an adsorption cycle. An additional desorption cycle may be initiated if the concentration downstream of the filter is not zero, as this indicates that the filter is filled over its maximum capacity. This is the case when, for example, the downstream concentration approaches or is substantially equal to the upstream concentration.

The value for the theoretical capacity of the filter may be reset to correspond to the accumulated desorbed amount if the desorbed amount of pollutants is less than the accumulated amount after a number of complete desorption cycles. Such a resetting, or adjustment, of the theoretical capacity is a long term process, stretching over weeks or months, reflecting the deterioration of the filter. The theoretical capacity is the value of the filter capacity used by the central processing unit when determining the need for a desorption cycle. Hence the degradation of the filter does not affect the performance of the arrangement, as this can be compensated for by more frequent desorption cycles. An error signal is generated if the adjusted value of theoretical capacity drops below a predetermined minimum value.

An error signal is generated if the measured values of pollutant concentration from two independent sensors upstream of the filter differ more than a predetermined amount. Depending on the calibration of the sensors, the output signals should be equal or near equal, as they are measuring the same quantity.

An error signal is generated if the measured value of pollutant concentration from a sensor downstream of the filter is significantly above zero following a desorption cycle. After desorption the filter should absorb all incoming pollution. If this is not the case, then the filter may have developed a fault or reached the end of its service life.

An error signal is generated if the accumulated desorbed amount from the filter exceeds the accumulated adsorbed amount by more than a predetermined percentage. Similarly, an error signal is generated if the accumulated adsorbed amount exceeds the accumulated desorbed amount by more than a predetermined percentage. This percentage is dependent on a number of factors, such as legal requirements, and may for example be selected in the range 10-50 %.

A further error signal is generated if the accumulated adsorbed amount is substantially equal to the accumulated desorbed amount, while the pollutants desorbed to the engine results in a measured air factor that differs significantly from a calculated air factor in exhaust gases emitted from the engine. The central processing unit of the engine control system is mapped to compensate for the additional amount of pollutants, such as hydrocarbons, added to the intake air of the engine during a desorption. If the resulting value of the air factor after combustion, as measured by a lambda probe, differs from the expected value, then a malfunction exists. The cause can be a faulty sensor upstream of the filter or a problem related to the desorption of the filter, such as insufficient filter temperature. This can be determined by further diagnostic tests by the central processing unit.

An error signal is generated if an actual rate of desorption per unit of time from the filter differs from a predetermined rate of desorption per unit of time. This rate can be determined by experimentation and plotted in a diagram, or mapped in the central processing unit, for comparison with actual measured values for the rate.

An error signal is generated if a measured temperature in the filter is below a predetermined required value for desorption. As will be described below, the filter according to the embodiment described herein requires heating to a minimum temperature in order to desorb the pollutants satisfactorily. Hence, a temperature sensor may be provided in the filter to monitor the temperature during desorption. Heat can be supplied either electrically, or by using air heated by the engine exhaust gas, as described below.

A desorption cycle may be followed by a ventilation cycle, during which one or more sensors for measuring pollutant concentration downstream of the filter can be calibrated by the central processing unit. The main purpose of the ventilation cycle is to remove all traces of desorbed pollutants from all conduits leading into the passenger compartment. In addition, the cycle may also be used to speed up the cooling of the filter and reduce the time taken until the adsorption cycle can be resumed.

An error signal is generated if a measured value of pollutant concentration downstream of the filter is above zero during the ventilation cycle. When the filter has been desorbed it should absorb all incoming pollution. If this is not the case, then the filter may have developed a fault or reached the end of its service life.

An error signal is generated if the measured values of pollutant concentration upstream of the filter during an adsorption cycle and upstream of the filter during a desorption cycle differ more than a predetermined amount. In both cases the incoming gas has the same concentration of pollutants. A noticeable difference between the output signals of the sensors indicates that one sensor may be malfunctioning.

An error signal is generated if a diagnostic test indicates an electrical fault in a sensor, a valve or a fan in the arrangement. Tests of this type merely indicate if a sensor or a fan has suffered an electrical malfunction, such as a broken or disconnected electrical circuit for controlling or receiving signals from a particular component part.

The invention also relates to an arrangement for monitoring operational status of an apparatus arranged to adsorb pollutants from the ambient atmosphere and to desorb said pollutants to an internal combustion engine, which apparatus includes a filter for adsorbing pollutants, a means for causing ambient air to flow through the filter into a passenger compartment or back into the atmosphere during an adsorption cycle, a means for causing air to flow through the filter into the engine during a desorption cycle, a source of heat for heating the filter during said desorption cycle, a number of controllable valves for controlling the direction of the airflow during different cycles, and a central processing unit for controlling said valves in response to input signals from a number of sensors and for monitoring the function of the said sensors.

According to a basic embodiment, the arrangement may be monitored by a sensor for measuring pollution concentration in a source of gas, such as ambient air, positioned upstream of the filter, and a sensor for measuring pollution concentration in the desorbed gas positioned downstream of the filter. The central processing unit is arranged to use signals from the said pollution sensors for monitoring the adsorption of pollutants in the filter, to initiate a desorption cycle before the filter becomes saturated, to monitor the desorption of pollutants from the filter, and to generate an error signal if a desorbed amount differs from an adsorbed amount. Alternatively an error signal may be generated if the pollution release pattern from the filter is abnormal, that is, if the variation of pollution concentration over time differs from expected values. The expected values can be represented by a curve in a diagram stored in the CPU.

According to a further embodiment, the gas may be directed through the filter in a first direction during the adsorption cycle, and in a second direction, opposite to the first direction, during the desorption cycle. By reversing the flow between the adsorption and desorption cycles, a single sensor may be used to measure the pollution concentration during both the adsorption and the desorption cycle. In the following text, this arrangement will be referred to as a counterflow desorption.

The central processing unit is arranged to calculate an accumulated amount of pollution adsorbed by the filter, using the signal from the pollution sensor upstream of the filter, the vehicle speed and a known value for fan speed during an adsorption cycle. In the same way, the central processing unit is arranged to calculate an accumulated amount of pollution desorbed from the filter, using the signal from the same pollution sensor and a known value for air flow during a desorption cycle.

During the adsorption cycle a fan with a controllable speed may be used. During the desorption cycle it is possible to use the vacuum in the intake conduit of the engine to create a flow through the filter. However according to a preferred embodiment, an air pump or fan may be used to achieve a more controlled flow to the engine.

According to an alternative embodiment, the filter can be provided with a sensor for measuring the accumulated amount of pollutants. This sensor may be a physical sensor measuring the saturation of the filter directly, or a virtual sensor estimating and/or calculating the amount of pollutants on the basis of one or more sensor signals transmitted to the central processing unit. Values used by such a virtual sensor may include signals indicating flow, pollution concentration and temperature.

The central processing unit may be arranged to compare the accumulated amount of pollution adsorbed by the filter with the theoretical capacity of the filter and to initiate a desorption cycle when the accumulated amount is near or equal to a predetermined degree of the theoretical capacity of the filter. As described above, the value for the theoretical capacity may be reset to the accumulated desorbed amount if the desorbed amount of pollutants is less than the accumulated amount after a number of complete desorption cycles. As the theoretical capacity of the filter will be decreasing slowly over a period of time, a low pass filter with a time constant of several weeks, or even months, may be used for this purpose.

According to a further embodiment, the gas may be directed through the filter in a second direction, identical to the first direction, during the desorption cycle. In the following text, this arrangement will be referred to as a concurrent flow desorption.

The central processing unit may be arranged to calculate an accumulated amount of pollution adsorbed by the filter, using the signal from the upstream pollution sensor and a known or measured value for fan speed during an adsorption cycle. As will be described in greater detail below, the arrangement may be integrated in the ventilation system of the vehicle. Hence the speed of the fan, as set by a dashboard control, will be known to the central processing unit. In addition, the speed of the vehicle may influence the air pressure at the air intake and hence the flow of air into the ventilation system during an adsorption cycle. The air mass flow through the filter can be calculated as a function of the speed of the fan and vehicle speed and can thereby be determined by the central processing unit. Similarly, the central processing unit may be arranged to calculate an accumulated amount of pollution desorbed by the filter, using the signal from the downstream pollution sensor and a known value for airflow during a desorption cycle.

As for the embodiment of counterflow desorption, a sensor for measuring the accumulated amount of pollutants may be provided in the filter.

Similarly, the arrangement for comparing the accumulated amount of pollution adsorbed by the filter with a theoretical capacity of the filter and for initiating a desorption cycle when the accumulated amount is near or equal to a predetermined degree of the capacity of the filter is also described above. The main difference between the embodiments for counterflow and concurrent flow is the positioning of the pollution sensors, as will be described in detail below.

According to a further embodiment for concurrent flow, a third sensor for measuring the concentration of pollutants is provided upstream of the filter. The central processing unit is arranged to compare the output signals from the two upstream pollution sensors and generate an error signal if the difference between the output signals exceed a predetermined level. Depending on the calibration of the sensors, the output signals should be equal or near equal, as they are measuring the same quantity.

The arrangement can be used to check the function of the upstream sensors during an adsorption cycle for arrangement using either counterflow or concurrent flow, as well as for checking the combined upstream/ downstream sensor for counterflow operation.

According to an alternative embodiment, the two pollution sensors may have different sensitivity ranges. This sensor arrangement may be used in two ways. For both concurrent flow and counterflow operation, the central processing unit is arranged to select an output signal from one of said sensors depending on the source of the gas upstream of the filter. One such source is ambient air, which has low pollution concentrations, while an alternative source may be the engine exhaust during a cold start, which exhaust has a significantly higher pollution concentration. In order to get accurate output signals for the calculation of accumulated pollution levels in the filter during an adsorption cycle it may be necessary to provide pollution sensors with different sensitivity ranges. For counterflow operation, the same feature may be used for getting a more accurate output signal for the calculation of accumulated desorbed pollution levels from the filter during an desorption cycle.

A further embodiment involves a ventilation cycle that may be performed after a desorption cycle, in order to ventilate desorbed pollutants from the apparatus before a subsequent adsorption cycle. This is primarily used for removing all traces of desorbed pollutants from all conduits leading into the passenger compartment. In addition, the cycle may also be used to speed up the cooling of the filter and reduce the time taken until the adsorption cycle can be resumed.

A ventilation cycle may also be performed at regular intervals during an adsorption cycle to determine the status of the filter. This is particularly useful for an arrangement using counterflow desorption. A further reason may be that an error signal transmitted to the CPU requires a test of a sensor or sensors to be performed.

The type of pollution sensor or sensors used for the above arrangements is not of vital importance for the function of the invention. Any sensor giving sufficient accuracy for measuring pollution concentration in ambient air or desorbed gas may be used. Examples of such sensors are infra-red sensors or semiconductor type sensors.

For all the above embodiments, a temperature sensor may be provided for measuring the temperature of the filter during desorption. This is due to the fact that the filter requires heating to a minimum temperature in order desorb the pollutants satisfactorily.

### BRIEF DESCRIPTION OF DRAWINGS

In the following text, the invention will be described in detail with reference to the attached drawings. These drawings are used for illustration only and do not in any way limit the scope of the invention. In the drawings:
- Figure 1: shows an arrangement according to the invention during normal, adsorbing operation;
- Figure 2a: shows the arrangement of Figure 1 during counterflow desorption of an adsorption unit;
- Figure 2b: shows the arrangement of Figure 1 during concurrent flow desorption of an adsorption unit;
- Figure 3a: shows the arrangement of Figure 1 during counterflow ventilation of an adsorption unit;
- Figure 3b: shows the arrangement of Figure 1 during concurrent flow ventilation of an adsorption unit;
- Figure 4: shows a schematic control diagram for the arrangement according to the invention;
- Figure 5: shows an arrangement according to a further embodiment of the invention for an adsorbing operation during a cold start;
- Figure 6: shows the arrangement of Figure 4 during desorption of the adsorption unit;
- Figure 7: shows the arrangement of Figure 4 during ventilation of the adsorption unit;
- Figure 8a-c: shows a number of possible sensor arrangements used during an adsorption mode;
- Figure 9a-b: shows a number of possible sensor arrangements used during an desorption mode;
- Figure 10a-b: shows a number of possible sensor arrangements used during a ventilation mode.

### MODES FOR CARRYING OUT THE INVENTION

In the following text a number of embodiments will be described in detail. When describing the direction of the flow of air or gas, the terms "upstream" and "downstream" are defined to apply to the instantaneous direction of flow. Because the direction of flow may be reversed between adsorbing and desorbing modes in certain embodiments, a first device may be placed upstream of a second device in the adsorbing mode and downstream of the same device in the desorbing mode.

The description below describes a method and an arrangement for removing harmful emissions and pollutants, such as hydrocarbon compounds, from a source of gas, such as ambient air, by means of an adsorption unit arranged in a ventilation system for a passenger compartment in a vehicle provided with a combustion engine. The described embodiments are mainly intended for adsorption of hydrocarbons, but the invention can also be applied to other emissions and pollutants present in ambient air, such as ozone, carbon monoxide (CO), methane (CH₄), nitrous oxide (N₂O), or sulphur compounds, such as sulphur hexafluoride (SF₆). Similarly, the filter used for removing pollutants is adapted to the relevant type of pollutant, such as zeolite or activated carbon filters for hydrocarbons. In the following text and the claims the term "pollutants" is used to cover all such emissions and greenhouse gases, irrespective of their source. The only limitation is that it must be possible to oxidize or reduce the pollutants in an internal combustion engine, which for instance excludes carbon dioxide (CO₂). The solution according to the invention may be applied to these and other embodiments, which require monitoring and diagnostic tests to ensure proper function.

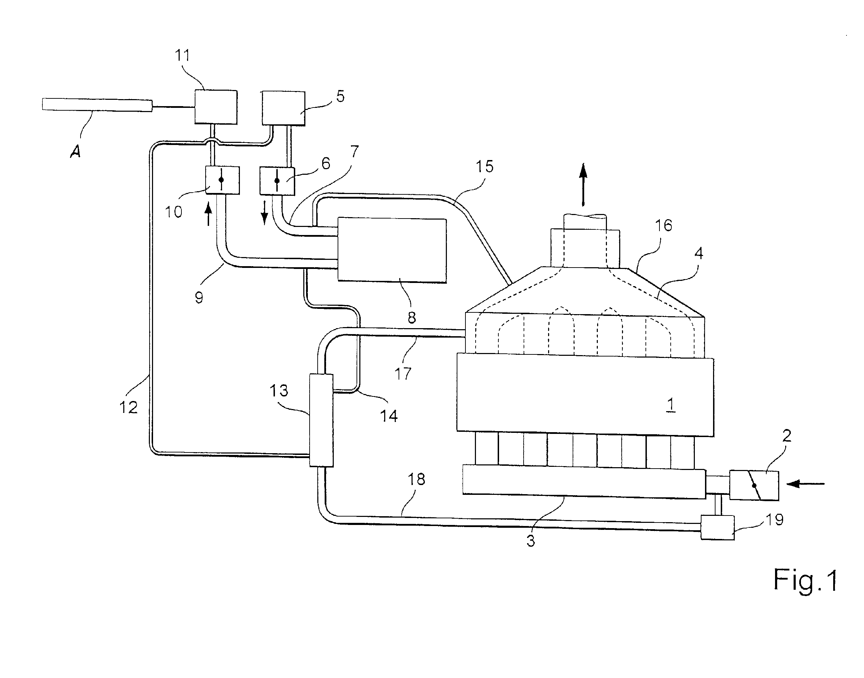

Figure 1 shows a multicylinder internal combustion engine 1 with an intake conduit provided with a main throttle 2. From the throttle 2, intake air passes through an inlet manifold 3 connected to each cylinder. The combusted exhaust gases leaves the engine through an exhaust manifold 4. In this case the exhaust manifold 4 is double walled, in order to enable an air stream to be heated without coming into contact with the exhaust gases. This is achieved by enclosing the exhaust manifold 4 within an outer casing 16, allowing an air stream to flow between the exhaust manifold and the casing. This arrangement will be described in more detail below. The exhaust gases subsequently pass through a conventional catalytic converter and a silencing arrangement (not shown), out into the atmosphere.

The vehicle is further provided with a ventilation system for ventilating a passenger compartment. The ventilation system comprises an air filter 5 for ambient air, which filter removes small particles, pollen, etc. from the air drawn into the ventilating system. During an adsorption mode, ventilating air is drawn into the air filter 5 from the ambient atmosphere. From the air filter 5 the ventilating air is drawn through a first control valve 6 and a first ventilation duct 7, into a filter 8 for adsorbing hydrocarbons. Apart from preventing harmful particles from reaching the passenger compartment, the air filter 5 protects the adsorbing filter and prevents it from becoming clogged by dust and other such particles. The hydrocarbon-adsorbing filter 8 preferably contains active carbon or a zeolite. Other suitable adsorbent or adsorbent materials may be used depending on the pollutant to be adsorbed. The cleaned air is then drawn through a second ventilating conduit 9 and a second control valve 10 by a ventilating fan 11. Finally, the fan 11 blows the ventilating air is through the existing ventilating ducts and ventilator outlets (not shown) into the passenger compartment.

Alternatively, the cleaned air may be directed through said ventilation ducts directly back into the atmosphere.

According to the preferred embodiment described above, the ventilation system includes both an air filter 5 and a hydrocarbon-adsorbing filter 8. However, it is also possible to eliminate the separate air filter 5 by using the hydrocarbon-adsorbing filter 8 as a combined air filter and adsorbing filter. The combined filter unit could be provided with an integrated housing, with a replaceable air filter section immediately adjacent the hydrocarbon-adsorbing section to achieve the above protective function.

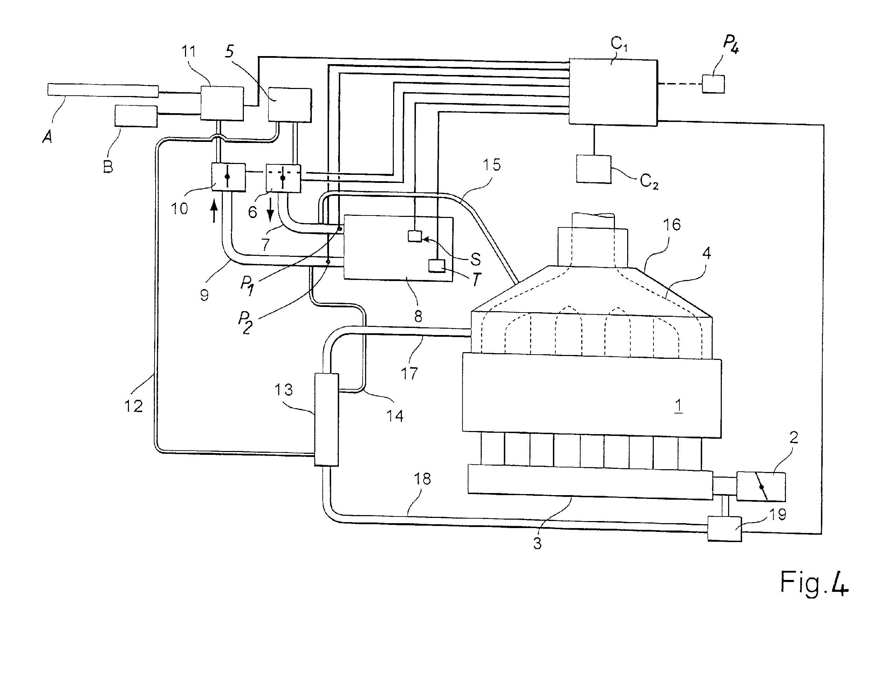

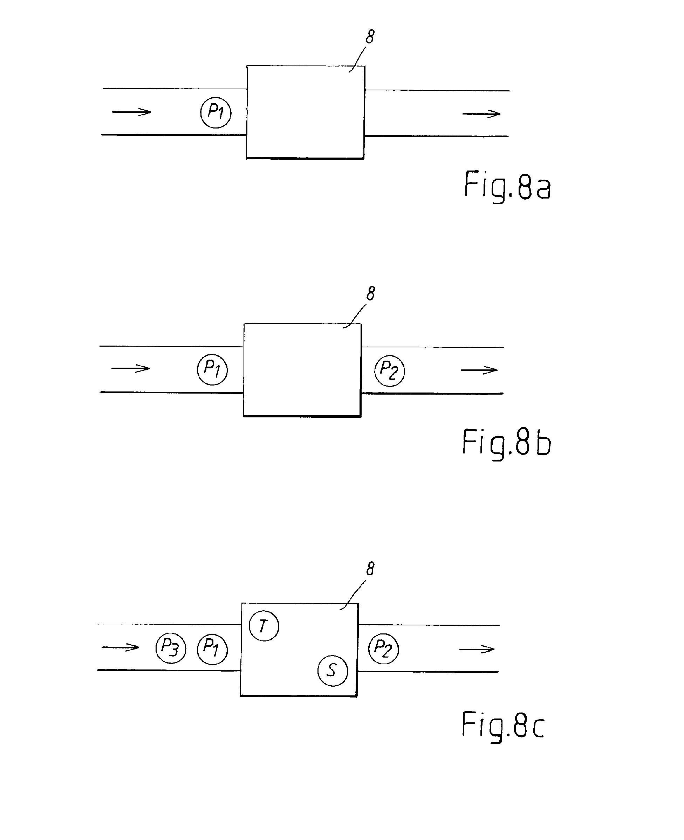

The above arrangement is mainly operated when the vehicle is stationary, that is, when it is parked with the ignition switched off. This enables the filter 8 to adsorb hydrocarbons from the ambient air while the vehicle is not in use. Control of the operation of the system is preferably achieved by means of a sensor, which monitors the level of pollution or concentration of hydrocarbons in the ambient air drawn into the arrangement. Such a sensor arrangement is shown in Figure 4. The sensor trigger level can be set at the factory, or at the point of sale, in order to adapt the system to different markets, local conditions or current regional or national legislation. Further filter and sensor arrangements, in particular their monitoring functions, will be described in more detail in connection with Figures 8a-c, 9a-b and 10a-b below.

Whether the vehicle uses a timer or a sensor, the arrangement will allow an average stationary vehicle to adsorb hydrocarbons from the ambient air during 7-8 hours each working day. The adsorbing capacity of the filter is preferably selected so that it can adsorb a predetermined concentration of hydrocarbons from the ambient air for at least such a period of time, without becoming saturated between successive desorptions. This capacity can be calculated by using the capacity of the ventilating fan, the expected maximum pollution level and the longest period of time over which the fan is expected to operate.

As the vehicle according to this example is stationary when the adsorbing process is being performed, it is preferred to provide power to the system without draining the standard battery pack used for e.g. starting the vehicle. Most of this power will be used for operating the fan, but other parts, such as various controllable valves and sensors must also be supplied with electric power. In the example shown in Figure 1, a solar panel A mounted on the vehicle is used for this purpose.

Power can, however, also be supplied from other sources of renewable energy, an external plug-in source, an additional rechargeable battery pack in the vehicle or a combination of the above. Such a combination of the above alternatives would be advantageous for special cases, such as when a heavy snowfall covers the solar panel, making it inoperative. An additional power source B of this type is indicated in Figure 4.

The above examples describe the arrangement for a stationary vehicle. When the vehicle is moving, the ambient air is either drawn through the ventilation system as described above, with the fan powered by a generator or a rechargeable battery in the vehicle, or forced through the system by the air pressure built up in front of the vehicle as it travels forward at speed. A standard ventilation system is provided with a number of different control settings on the dashboard. These settings may include functions such as fan speed, free flow (the fan switched off), recirculation and ventilation shut-off. In this case, cleaning of ambient air takes place as soon as a setting allowing airflow through the ventilation system is selected. For an average vehicle, the relative amount of hydrocarbons adsorbed by the filter when the vehicle is stationary and moving is 80-90% and 10-20% respectively. This is generally proportional to the periods of time when an average commuting vehicle is parked and in use.

If a setting preventing flow into the passenger compartment is selected, such as recirculation, adsorption may continue and the cleaned air is instead returned to the atmosphere.

As stated above, the hydrocarbon adsorbing filter 8 has a limited capacity for adsorbing pollutants and must therefore be desorbed before it reaches its maximum storage capacity and becomes saturated. The desorption is initiated by a central processing unit, which monitors the concentration of pollution in the ambient air by means of a pollution sensor P₁ and calculates the accumulated amount of pollution in the filter using the output signal from the sensor and the air mass flow through the filter. The air mass flow is known, as the flow is proportional to the speed of the fan in the ventilation system and the speed of the vehicle. The central processing unit will also adjust the calculation in response to variations in pollution concentration and fan speed over time.

According to a simplified version of this embodiment, desorption is initiated when a fan controlled by an ambient air pollution sensor P₁ (see Figure 4) has been operated for a predetermined period of time. In this embodiment it is assumed that the filter unit is approaching saturation when the fan has been operated for a predetermined period of time, during which the sensed ambient air pollution level has been above the pre-set trigger limit.

Alternatively, a desorption process is initiated when a signal from a sensor S (see Figure 4) in the filter 8 indicates that the amount of hydrocarbons has exceeded a predetermined level. Such a sensor measures the saturation of the filter directly.

The desorption of the filter 8 takes place when the engine is running and has reached its normal operating temperature. Immediately after a cold start, the exhaust manifold will not be sufficiently warm and the catalytic converter will not have reached its light-off temperature. Hence, the desorption is not performed until a signal from an existing engine management system confirms that the light-off temperature has been reached (see Figure 4). During desorption, the first and second control valves 6, 10 are arranged to close the inlet and outlet of ventilating air to and from the first and second ventilating ducts 7, 9 respectively. These inlet and outlet valves are temporarily closed in order to isolate the filter from the ventilation system when a desorption of the hydrocarbon-adsorbing filter is being performed. As closure of the control valves 6, 10 will interrupt the flow of air into the passenger compartment, the desorption cycle must also be adapted to operate without causing inconvenience or discomfort for the occupants. In a preferred embodiment, an existing passenger compartment air recirculation function is used during desorption. This type of function is available in most modern vehicles and is commonly used for e.g. preventing exhaust fumes from entering the compartment in tunnels or in slow moving traffic. As the desorption cycle typically only requires 1-5 minutes to purge the filter unit, it is unlikely to be noticed by the passengers.

The function can also be achieved either by an intelligent central processing unit C₁ having sensors P₄ (see Figure 4) for humidity and/or temperature in the passenger compartment, in order to decide when the desorption cycle can be started, or by providing the system with bypass duct to allow the fan to draw air directly from the air filter 5 during the desorption cycle. A further alternative could be to provide the system with an additional adsorbing filter that would be used during desorption.

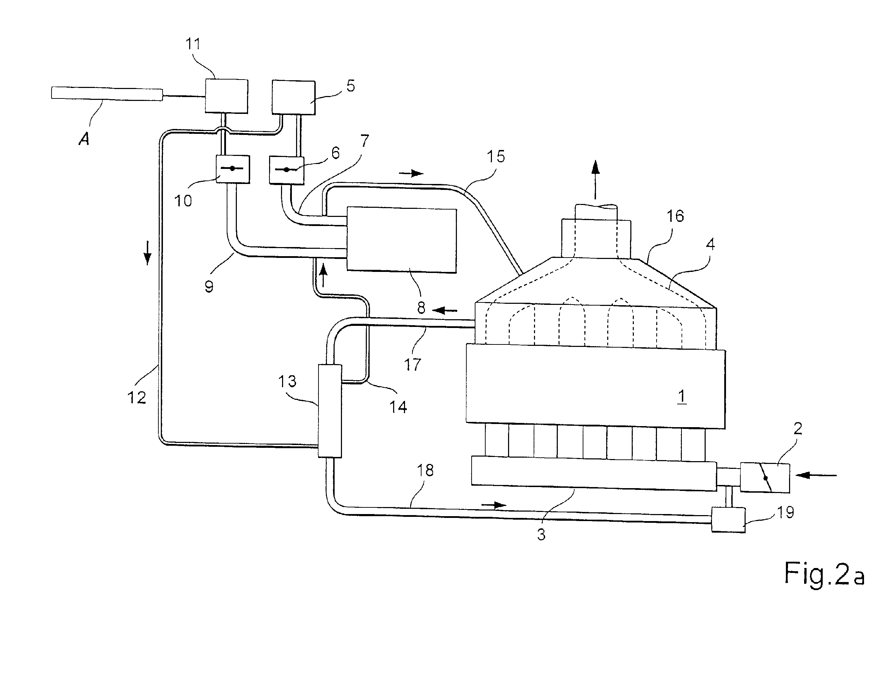

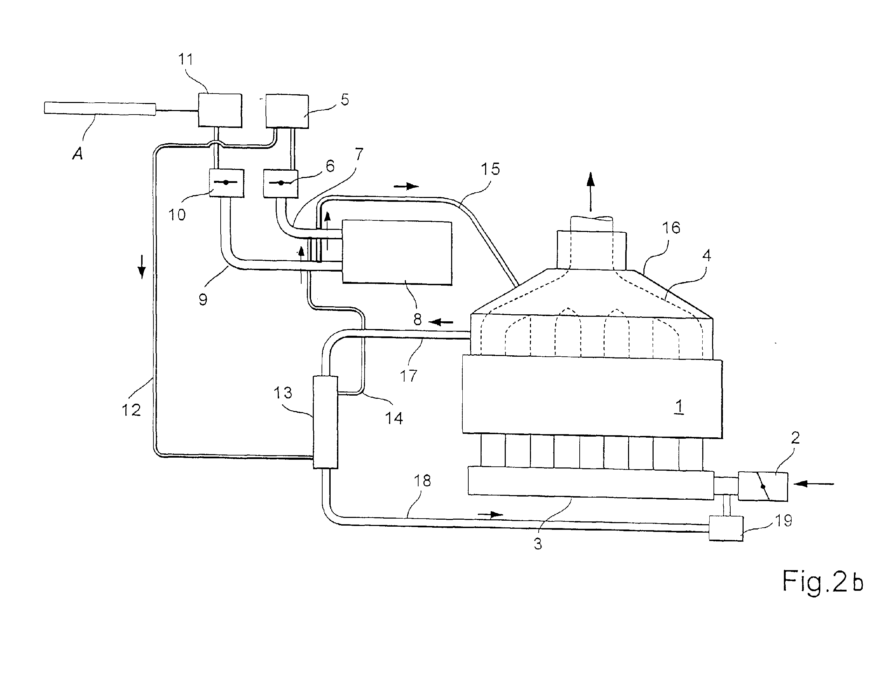

The flow of air through the system during a counterflow desorption mode is shown in Figure 2. As soon as the first and second control valves 6, 10 are closed, a third control valve 19 is arranged to open in order to provide a source of low pressure from the intake manifold 3 of the engine 1. This low pressure causes ambient air to be drawn from the atmosphere, through the compartment air filter 5 and into a first desorption duct 12. In order to ensure flow through the filter during desorption, the low pressure of the intake manifold can be supplemented by an air pump (not shown). The air is then drawn through a first heat exchanger 13, where it is heated to a temperature sufficiently high to cause hydrocarbons to be released from the adsorbing filter 8. Typically, the temperature required for this purpose is 120-150 °C. However, in order to prevent the filter unit 8 from being poisoned by heavy hydrocarbon fractions, desorption at elevated temperatures, such as 200°C, may be required at regular intervals, e.g. every 10^{th} desorption cycle. Hydrocarbon poisoning could eventually cause the filter to become inoperative. The heat exchanger can be of any suitable type, such as a tubular or a plate heat exchanger, preferable of the counter-flow type. From the first heat exchanger 13, the heated ambient air is drawn through a second desorption conduit 14 that is connected to the second ventilating duct 9. The heated air then passes through the hydrocarbon-adsorbing filter 8 in the opposite direction to the normal ventilating airflow. When passing through the filter 8, the hot air causes the hydrocarbons to release from the adsorbent material and mix with the flowing air. The mixture of air and hydrocarbons is drawn through a third desorption conduit 15 connected to the first ventilating duct 7, and into a second heat exchanger 4, 16. This heat exchanger comprises a double walled exhaust manifold 4, 16, which comprises a surrounding cover 16 that encapsulates a section of the exhaust manifold 4 from the side of the engine past a point where the branches of the manifold are joined. When passing the exhaust manifold 4 the mixture of air and hydrocarbons is heated to a temperature sufficient to raise the temperature of the ambient air in the first heat exchanger 13 to the required levels stated above. The heated mixture is drawn from the double walled exhaust manifold 4, 16 to the heat exchanger 13 via a fourth desorption conduit 17. After heating the ambient air to be supplied to the adsorbing filter 8, the mixture of air and hydrocarbons is drawn through a fifth desorption conduit 18 and the third control valve 19 into the inlet manifold 3 of the combustion engine 1. In this way the hydrocarbons may be combusted in the engine 1 and any residual products will be handled by the conventional catalytic converter.

By reversing the direction of flow during desorption, it is ensured that no pollutants will be drawn into the passenger compartment. When the adsorption mode is resumed, any pollutants remaining in the first ventilation duct 7 or the fourth desorption conduit 15 will simply be drawn back into the adsorbing filter 8.

According to a further embodiment, the heating of the ambient air can be performed by the second heat exchanger 4, 16 alone. In this embodiment, ambient air would either be supplied to the adsorbing unit, during adsorption mode, or be drawn directly to the double walled heat exchanger 4, 16 to be heated by the exhaust manifold 4, during desorption mode. The supply of ambient air can be controlled by a valve immediately after the air filter, or be drawn from the air filter and a separate source of ambient air. The heated air would then be drawn through the adsorbing filter and onwards to the intake manifold, as described above. However, as the temperature of the exhaust manifold can vary between 400-950°C for a petrol engine (250-800°C for diesel engines), the temperature of the air leaving the double walled, second heat exchanger is controlled in order to avoid overheating of the adsorbing filter. This can be achieved by a cooling means, such as a heat exchanger, but more preferably by an arrangement for injecting varying amounts of ambient air (not shown). This can be achieved by means of a controllable valve and a temperature sensor (not shown) placed between the manifold heat exchanger and said valve. The central processing unit (see Fig. 4, "C₁") could then control the valve to inject ambient air into the heated airflow and modify its temperature, based on the signal from said temperature sensor.

Desorption of the hydrocarbon adsorbing filter 8 takes place when the engine is operated at low load, which is the most common operating condition for a vehicle driven by an internal combustion engine. At low load, the pressure in the intake pipe or manifold 3 downstream of the throttle 2 will be low. At high load, or acceleration, the third control valve 19 is closed, partly due to the increased pressure in the manifold, and partly to prevent a reduced response caused by the added hot mixture of air and hydrocarbons in the intake air. In addition, the increased pressure in the intake conduit of a normally aspirated engine would prevent air from being drawn through the system at high load. For a supercharged engine, desorption can be performed during high load by supplying the mixture to an intake arrangement for a turbocharger or compressor (not shown). This arrangement may include an injector valve or similar to achieve a vacuum for creating a sufficient flow of air through the conduits during desorption.

According to an alternative embodiment, shown in Figure 2b, it is possible to achieve concurrent flow desorption using a slightly modified arrangement as shown in Figure 2a. One such modification involves connecting the second desorption duct 14 to the first ventilation duct 7, while connecting the third desorption duct 15 to the second ventilation duct 9. By closing the first and second valves 6, 10, the direction of flow through the arrangement during desorption will remain unchanged, compared to that of Figure 2a. However, the flow of heated air through the filter 8 will be in the same direction as for the adsorption mode described in connection with Figure 1.

Experiments have shown that the addition of heated air to the intake air during low load, can in itself reduce the fuel consumption by up to 3%. The added mixture of air and hydrocarbons during desorption can give a further reduction in the region of 0,05-0,1%.

The switching between the adsorption and desorption modes (an additional mode for ventilating is described below), including the operation of the fan 11 and the opening and closing of the first, second and third valves 6, 10, 19, is preferably controlled by a central processing unit C₁, or CPU, as shown in Figure 4. Said unit is also connected to the sensors, such as the pollution level sensors P₁ and P₂ and/or the optional filter temperature sensor T, the filter saturation sensor S, and the temperature and humidity sensor P₄ in the passenger compartment. In order to determine whether the engine is switched off or its current operating state, the control unit will also use data from the engine management unit C₂.

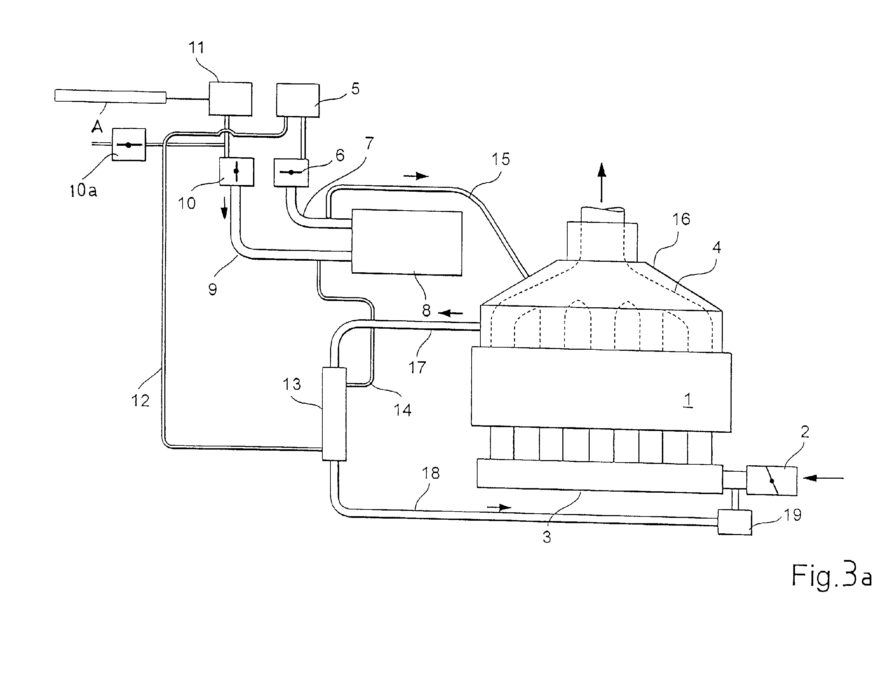

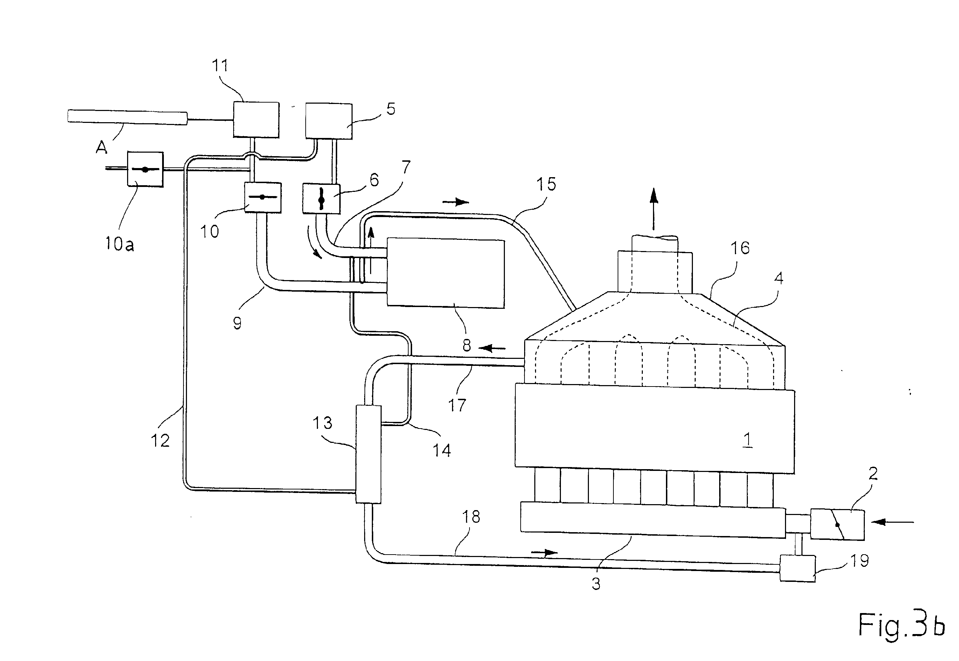

A desorption cycle is usually followed by a ventilation cycle, in order to cool the heated filter to a temperature at which adsorption can be resumed and to ventilate any remaining desorbed pollutants from the ventilation conduits. During the ventilation cycle air can be drawn either from the atmosphere or from the passenger compartment, as shown in the embodiments of Figures 3a and 3b, from the passenger compartment. In operation, the arrangement shown in Figure 3a is switched from desorption mode to a counterflow ventilation mode by opening the second valve 10 to draw air through the filter in the opposite direction to the direction of flow during adsorption. In this case, the configuration of the ventilation conduits and their low flow resistance will cause air to be drawn through the second valve and the second ventilating conduit 9 to the filter 8. This will ventilate any remaining desorbed pollutants from the second ventilating conduit 9 and the filter 8 into the third desorption conduit 15, from which the air is drawn to the air intake of the engine 1 as described in connection with the desorption mode and Figure 2 above. A small flow will also occur through the first and second desorption ducts 12, 14, but for all practical purposes this flow is negligible.

The arrangement shown in Figure 3a may optionally be provided with a further valve 10a, which allows ambient air to be connected to the conduit between the first valve 10 and the fan 11. This further valve has a double function, in that it allows the fan to draw ambient air into the passenger compartment during the concurrent desorption and ventilation modes and provides the sensors with ambient air during a sensor calibration performed by the diagnostic system. The further valve 10a would normally be closed and would only open during said sensor calibration, or during said desorption and subsequent ventilation to provide a supply of fresh air to the passenger compartment.

According to an alternative embodiment, shown in Figure 3b, it is possible to achieve concurrent flow ventilation using the slightly modified arrangement as shown in Figure 2a. During a concurrent desorption mode, as described above, the flow of heated air through the filter 8 will be in the same direction as for the adsorption mode described in connection with Figure 1. Following such a desorption, the arrangement will switch to a concurrent ventilation mode to remove all remaining desorbed gas from the ducts. This is achieved by opening the first valve 6, allowing ambient air to flow through the filter 8 and out through the third desorption conduit 15.

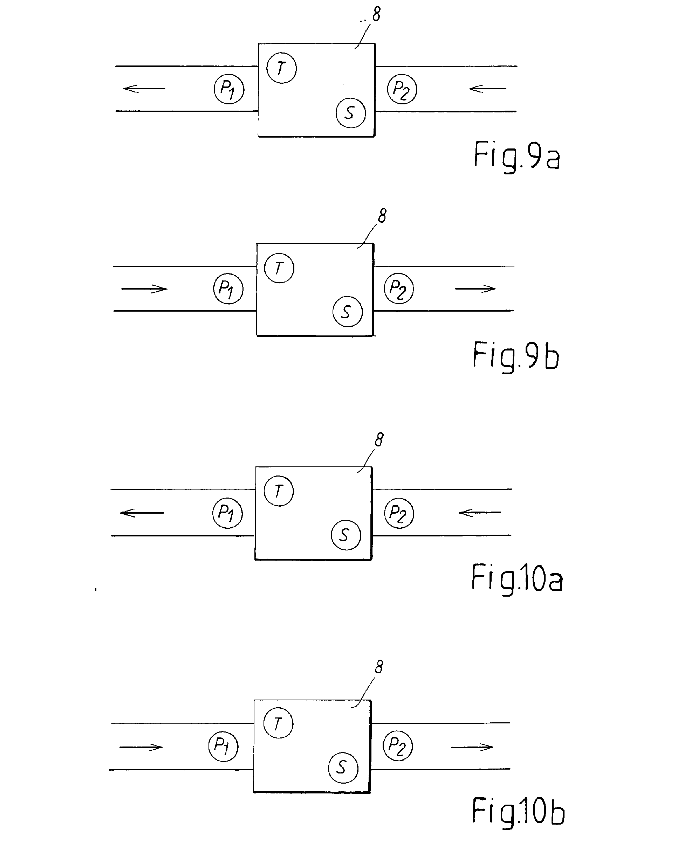

The ventilation cycle can also be used for checking the status of the filter 8, as will be described in more detail below in connection with Figures 10a-10b.

A modification of the embodiment shown in Figures 1 and 2 can also be used for removing pollutants from the exhaust gases during a cold start of the engine, before the catalytic converter has reached its light-off temperature.

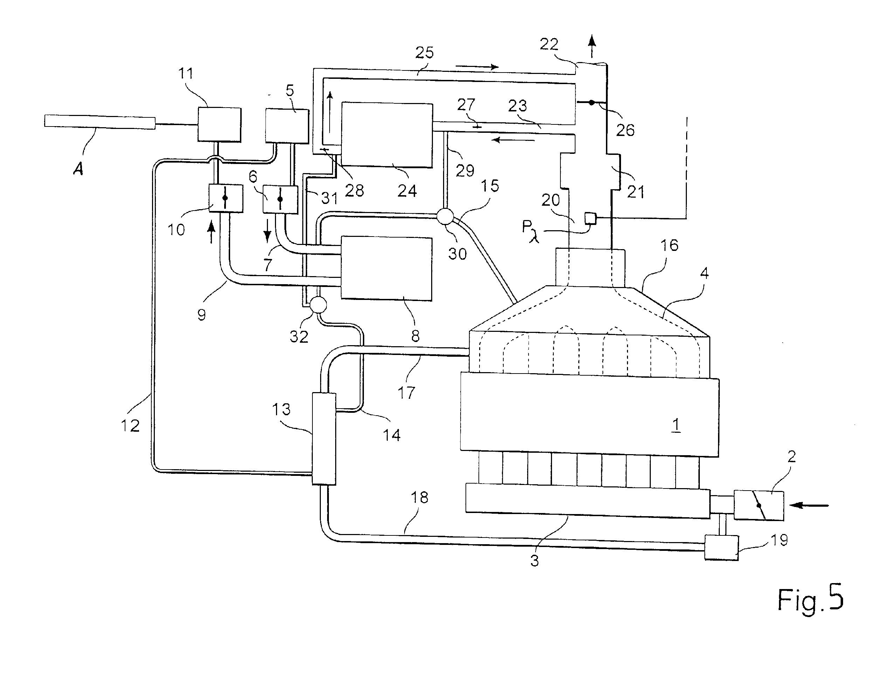

This embodiment is shown in Figure 5. After the exhaust manifold 4, the exhaust system comprises a first exhaust conduit 20, a catalytic converter 21 and a second exhaust conduit 22, eventually leading out to the atmosphere. Immediately downstream of the catalytic converter 21 the second exhaust conduit 22 branches into a third exhaust conduit 23 connected to a second adsorbing filter 24. A fourth exhaust conduit 25 leads out of the second adsorbing filter 24 and is connected to the second exhaust conduit 22 downstream of the point where said branch for the third exhaust conduit 23. A controllable exhaust throttle 26 is arranged between the points where the third and fourth exhaust conduits 23, 25 are connected to the second exhaust conduit. The exhaust throttle 26 is normally open, but will close during the adsorption mode of the second adsorbing filter 24. The operation during the adsorption mode is shown in Figure 5 and is as follows. During a cold start, the throttle 26 closes, forcing the exhaust through the adsorbing filter 24 via the third and fourth exhaust conduits 23, 24. The flow of exhaust through the filter continues until the existing catalytic converter 21 reaches its light-off temperature. A conventional lambda probe P_{λ} may be placed in the conduit 20 between the exhaust manifold 4 and the converter 21.

In order to desorb the second adsorbing filter 24, it has to be connected to the existing desorption conduits. This is achieved by providing each of the third exhaust conduit 23 and the fourth exhaust conduit 25 with a first and second desorption throttle 27, 28 respectively, upstream and downstream of the adsorbing filter 24. The first and second desorption throttles 27, 28 are normally closed, but will open during the adsorption mode of the second adsorbing filter 24. Between the first desorption throttle 27 and the adsorbing filter 24, the third exhaust conduit 23 branches into a sixth desorption conduit 29 that is connected to a first three-way valve 30 in the third desorption conduit 15 in the existing desorption arrangement shown in Figure 1 and 2. Similarly, between the second desorption throttle 28 and the adsorbing filter 24, the fourth exhaust conduit 25 branches into a seventh desorption conduit 31 that is connected to a second three-way valve 32 in the second desorption conduit 14.

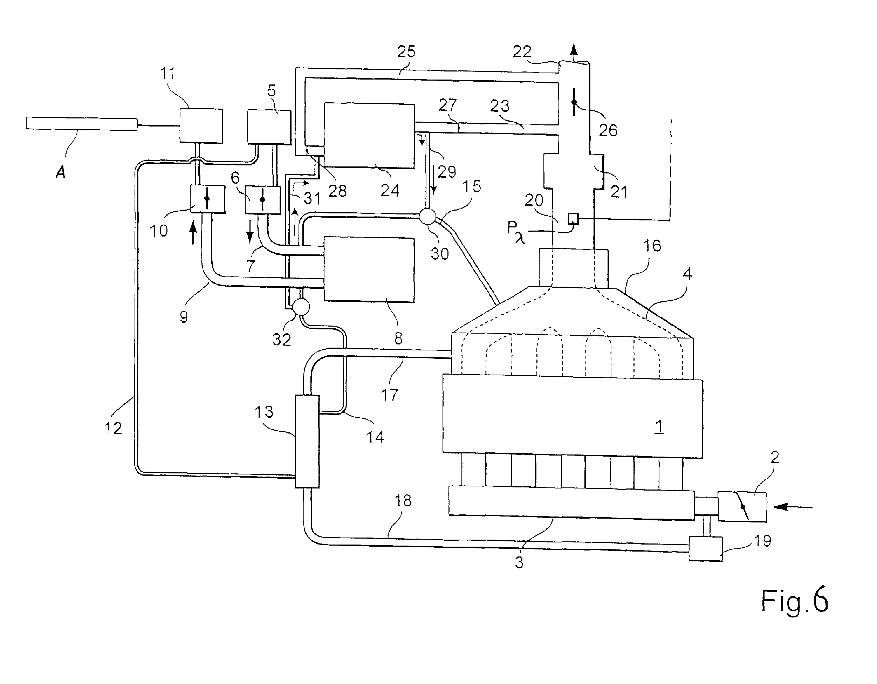

The operation during the desorption mode is shown in Figure 6 and is as follows. After the completion of a cold start adsorption sequence it may be necessary to desorb the second adsorbing filter 24. As for the first filter 8 this is preferably initiated if a central processing unit indicates that the filter 24 is full or nearly full. The sensors used for determining this are connected to a central processing unit (see Fig. 4, "C₁") that would function as described in connection with Figure 4 above. Desorption can take place on the condition that the engine is running, that the catalytic converter 21 has reached its working temperature, and that the first adsorbing unit is not being desorbed. When these conditions are met, the three-way valves 30, 32 are operated to switch the flow of heated ambient air from the second desorption conduit 14 through the seventh desorption conduit 31, the second adsorbing filter 24, the sixth desorption conduit 29, back to the third desorption conduit 15. As soon as the second adsorbing filter 24 has been desorbed, the three-way valves 30, 32 will return to their normal positions allowing a flow of air through the first adsorbing filter 8. As for the embodiment of Figure 2 this flow of air through the desorption conduits is created by the low pressure in the inlet manifold 3 when the third control valve 19 is opened.

As indicated by the arrows and the open first and second valves 6 and 10, adsorption of pollutants from the ambient air by the first adsorbing filter 8 can continue uninterrupted during desorption of the second adsorbing filter 24.

The cold start arrangement can also be adapted to the embodiment described above, where ambient air would be drawn directly to the double walled heat exchanger to be heated by the exhaust manifold (not shown). In this case the second three-way valve 32 would be positioned downstream of the temperature controlling means, but upstream of both the first and second adsorbing filters 8, 24. The third three-way valve 30 would be positioned downstream of the first and second adsorbing filters 8, 24.

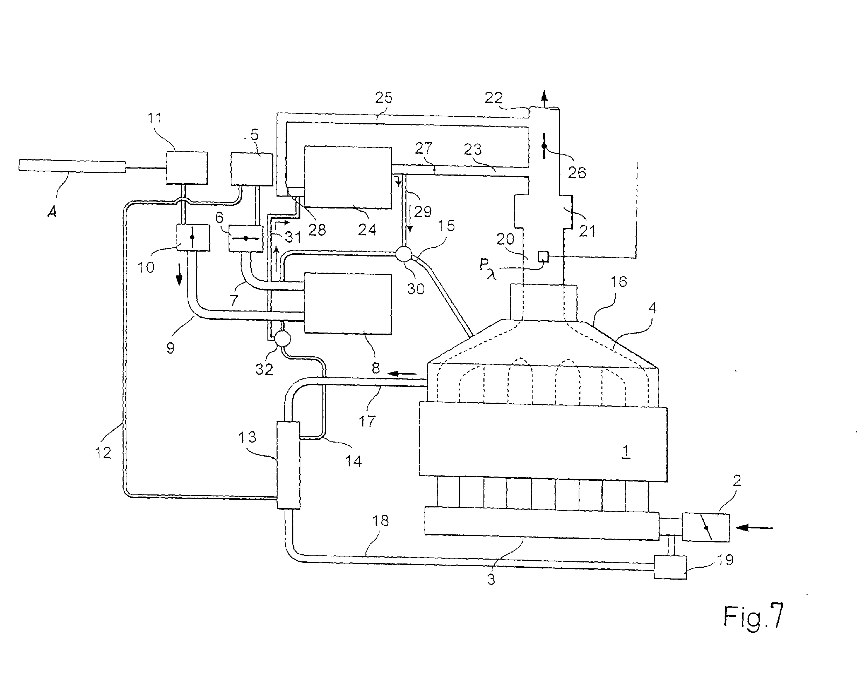

A desorption cycle is usually followed by a ventilation cycle, in order to cool the heated filter to a temperature at which adsorption can be resumed and to ventilate any remaining desorbed pollutants from the ventilation conduits. During the ventilation cycle air can be drawn either from the atmosphere, or, as shown in the embodiment of Figure 7, from the passenger compartment. In operation, when the arrangement is switched from desorption mode to ventilation mode for the second filter 24, the adsorbing mode for the first filter is temporarily interrupted. According to the embodiment of Figure 7 the second valve 10 will remain open while the fan 11 is switched off. At the same time, the first valve 6 is closed to prevent a reversed airflow through the air filter 5. In this case, the configuration of the ventilation conduits and their low flow resistance will cause air to be drawn through the second valve 10 and the second ventilating conduit 9 towards the first filter 8. However, the first valve 6 is closed and the second three-way valve 32 is switched to permit flow from the second conduit 9 to the seventh desorption conduit 31. To allow ventilation of the second adsorbing filter 24 the first and second desorption throttles 27, 28 on either side of said filter 24 will remain closed. Hence the air will flow through the second adsorbing filter 24 and the sixth desorption conduit 29 towards the first three-way valve 30 in the third desorption conduit 15. The first three-way valve 30 is switched so that air will flow to the air intake of the engine, as described above.

According to an alternative embodiment, the adsorbing mode for the first adsorbing filter 8 is maintained with a reduced airflow into the passenger compartment. This is achieved by switching the second three-way valve 32 as described above, while maintaining the first and second valves 6, 10 open. Thereby the filtered air from the first adsorbing filter will flow both to the passenger compartment and through the second three-way valve 32 towards the second adsorbing filter 24.

The ventilation of said filter 24 can be aided further by controlling the second valve 10 or the fan 11. By partially closing the second valve 10, the increased pressure in the second ventilating conduit 9 will help to increase the airflow towards the second adsorbing filter. An increase of the speed of the fan will have a similar effect.

In order to achieve ventilation of the second adsorbing filter 24 without interrupting or disturbing the absorption mode in the first filter 8, the seventh desorption conduit 31 can be connected to a separate source of air. This source of air could be either of the air filter 5, the fan 11 or the passenger compartment.

Although the above embodiments are intended to adsorb hydrocarbons, or NMOG, the filter unit may also be adapted for other pollutants. By selecting an appropriate filter material, the adsorbing unit can be adapted for specific molecules of alternative pollutants such as nitric oxides (NO and NO2), carbon monoxide, ozone or various other organic compounds.

In order to ensure proper function of the embodiments described above, an arrangement for monitoring operational status is provided. Such an arrangement has been generally described in connection with Figure 4.

As described above, a central processing unit is required for controlling a number of valves in response to input signals from a number of sensors, for measuring and calculating the status of the filter unit, and for monitoring the function of the said sensors. A number of different sensor arrangements will be described below, in connection with possible flow directions for the adsorption, desorption and ventilation modes. The text also describes the function of each arrangement and possible diagnostic tests to be performed by the central processing unit.

### I. Adsorption mode

According to a basic embodiment using a minimum number of sensors, the arrangement is monitored by a first sensor P₁ for measuring pollution concentration in the ambient air. The first sensor P₁ is positioned upstream of the filter 8 and a second sensor P₁, P₂ for measuring pollution concentration in the desorbed air is positioned downstream of the filter 8. This arrangement is described in detail below. The central processing unit C₁ is arranged to use signals from the said pollution sensors P₁, P₂ for monitoring the adsorption of pollutants in the filter, to initiate a desorption cycle before the filter becomes saturated, to monitor the desorption of pollutants from the filter, and to generate an error signal if the desorbed amount exceeds or is less than the adsorbed amount.

If the flow of air through the filter is reversed so that counterflow is used during the desorption cycle, then the first and second sensors P₁ are identical, as shown in Figure 8a. However, if the flow of air is maintained through the filter so that concurrent flow is used during the desorption cycle, then the first and second sensors P₁ and P₂ are placed separately on either side of the filter, as shown in Figure 8b. For the Figures 8a and 8b, the direction of flow during adsorption mode is indicated by arrows.

According to a further embodiment, the arrangement can be provided with a third sensor P₃ for use mainly during the adsorption mode. If positioned adjacent to the first sensor P₁, the third sensor P₃ can be used as a back-up or reference sensor for P₁. Alternatively the sensors P₁ and P₃ may have different ranges of sensitivity, in order to measure pollution concentrations of different orders of magnitude. Example of such a cases are the increased concentration level during desorption for counterflow operation, and the special case of exhaust gas adsorption during a cold start of the engine. The positioning of the sensors P₁ and P₃ is not limited to being adjacent to each other, as shown in Figure 8c. A sensor for ambient air pollution may be placed anywhere between the intake air filter 5 and the pollution filter 8, while a sensor for desorbed air may be positioned anywhere in the desorption conduit 15. In the latter case, the sensor may be positioned after the valve 30, shown in Figures 5 and 6, in order to provide a single sensor for both pollution filters 8 and 24.

### Function

The air to be cleaned, in this case ambient air is led past pollution sensors P₁ and P₃ before reaching the filter. The filter subsequently adsorbs the relevant pollutant present in the ambient air. In this case the pollutant is hydrocarbons. The mass flow of air is estimated using the speed of the fan, vehicle speed, current valve settings and various ambient parameters, e.g. ambient temperature. The signals from sensors P₁ and P₃ are used to determine the pollution level in the ambient air flowing into the filter. The accumulated amount of pollutant in the filter is calculated by means of mass flow of air over time, i.e. the time during which the fan is operated. The accumulated amount of pollutants can alternatively be measured by the sensor S. Finally, the concentration of pollutants in the filtered air is measured by the sensor P₂.

### Diagnostics test

I.a) If no concentration of pollutants are measured by sensors P₁ or P₃ over a predetermined period of time, a diagnostic desorption is performed. If the result of this desorption is that the filter releases a concentration of pollutants above zero and/or the value of lambda (λ) changes noticeably when the airflow is released into the engine, then an error message is generated. Said value of λ is monitored by a λ-probe P_{λ} positioned before a first catalytic converter 21 downstream of the exhaust manifold. Note that the λ-test works mainly for hydrocarbons. Other kinds of pollutants may give a minor or no effect on the value of λ.
I.b) If the concentration of pollutants at the sensor P₂ is near zero, or at least considerably less than the concentration at the sensor P₁, then the filter is not yet filled to its maximum capacity. If the concentration of pollutants at the sensor P₂ is considerably greater than zero, then the filter is filled to its maximum capacity and a desorption should be performed if the filter is to continue filtering hydrocarbons from the ambient air. By calculating the accumulated amount of pollutants in the filter at the time it reaches its adsorption capacity, the current capacity of the filter can be determined. If the capacity of the filter drops below a predetermined level, then an error message is generated. Such an error message could indicate that the filter has reached its service life and needs to be replaced.
I.c) If the sensor P₂ measures a higher concentration of pollutants than either of the sensors P₁ and P₃, then an error message is generated. Such an error message would indicate that the filter is actually desorbing when it should be adsorbing pollutants.
I.d) If both the sensors P₁ and P₃ measures incoming ambient air, a comparison can be made between the signals from the sensors. If the difference in output level of the sensors exceed a predetermined limit, then an error message is generated. Such an error message indicates that one sensor is faulty, as the output from P₁ and P₃ should be substantially equal. If the difference between the signal levels are within said limit, then an adaption can be performed between the sensors.
I.e) When adsorption mode is initiated immediately after a desorption the concentration measured by the sensor P₂ should be zero or near zero. By using this a reference value, an adaption of the sensor P₂ can be performed. If the adaption exceeds a predetermined value, then an error message is generated.
I.f) Conventional electrical tests are performed on the fan or fans and the valves, to ensure proper operation.

### II. Counterflow desorption

Figure 9a shows an arrangement similar to that of Figure 8a during a desorption cycle using counterflow, where the direction of the air flow is indicated by arrows. The embodiment according to Figure 9a is provided with an second pollution sensor P₂ on the opposite side of the filter 8 to the first pollution sensor P₁. This second sensor P₂ is used by the central processing unit for monitoring the condition of the filter 8 and the first sensor P₁.

In order to monitor the heating of the filter during the desorption process, all embodiments may be provided with a temperature sensor T in the pollution filter 8. This enables the central processing unit to monitor that desorption takes place within a predetermined temperature range.

Optionally, the pollution filter 8 may also be provided with a saturation sensor S for direct measurement of the accumulated amount of pollutants, both during adsorption and desorption. Although the sensor S is optional, it has been indicated in Figures 8c, 9a-b and 10a-b.

As both the temperature sensor T and the saturation sensor S are placed in the filter unit 8, they are independent of the direction of flow.

### Function

In order to perform a desorption, heat is supplied to the filter. In this case, the heat is supplied from a heat exchanger using the exhaust gases from the engine as a heat source. However, heating may also be achieved by electric or other means. The temperature sensor T is used for checking that the temperature of the filter is sufficiently high to ensure release of pollutants. This predetermined temperature varies with the type of filter and what kind of pollutant has been adsorbed.

The direction of flow of the heated air is opposite to the adsorption direction. Hence the sensor P₂ measures the concentration of pollutants in the air entering into the filter, while the sensor P₁ measures the concentration in the air leaving the filter. The mass flow of air is calculated using the speed of the fan. Depending on how the air is supplied, it is also possible to determine the mass flow of air by means of the pressure drop across the filter. The accumulated amount of pollutants released from the filter during desorption is calculated by means of the concentration measured by the sensor P₁. Depending on the circumstances it may be necessary to correct the latter concentration, using the concentration measured by the sensor P₂ or a known background concentration.

Alternatively the amount of pollutants contained in the filter is measured by the sensor S, before and after desorption.

The engine control system for regulating the value of λ is adjusted in order to achieve complete combustion and a minimal effect on the value of λ. Said value of λ is monitored by the front λ-probe. Note that the λ-test works mainly for hydrocarbons. Other kinds of pollutants may give a minor or no effect on the value of λ.

### Diagnostics test

II.a If the accumulated amount of pollutants released from the filter is noticeably larger than the adsorbed amount, then an error message is generated.
II.b If the accumulated amount of pollutants released from the filter is noticeably smaller than the adsorbed amount, then an error message is generated.
II.c If the accumulated amount of pollutants released from the filter conforms with the amount adsorbed, but the value of λ changes noticeably when the airflow is released into the engine, then an error message is generated.
II.d The concentration of released pollutants in the flow of air is plotted over time. If the resulting curve differs significantly from a reference curve, then an error message is generated.
II.e If the temperature measured by the sensor T does not reach the minimum required temperature for desorption, then an error message is generated.
II.f The temperature of the filter is continuously measured by the sensor T during the desorption phase and is plotted over time. If the resulting curve differs significantly from a reference curve, then an error message is generated.
II.g Conventional electrical tests are performed on the fan or fans and the valves, to ensure proper operation.

### III. Concurrent flow desorption

Figure 9b shows an arrangement similar to that of Figure 8b during a desorption cycle using concurrent flow, where the direction of the air flow is indicated by arrows. The operation of the embodiment according to Figure 9b is the same as described for a desorption cycle in connection with Figure 8b.

As outlined in connection with Figure 9a above, the embodiment of Figure 9b is preferably provided with a temperature sensor T. The temperature sensor T and the optional saturation sensor S are placed in the filter unit 8 and are independent of the direction of flow.

### Function

In order to perform a desorption, heat is supplied to the filter. In this case, the heat is supplied from a heat exchanger using the exhaust gases from the engine as a heat source. However, heating may also be achieved by electric or other means. The temperature sensor T is used for checking that the temperature of the filter is sufficiently high to ensure release of pollutants. This predetermined temperature varies with the type of filter and what kind of pollutant has been adsorbed.

The direction of flow of the heated air is the same as the adsorption direction. Hence the sensor P₁ measures the concentration of pollutants in the air entering into the filter, while the sensor P₂ measures the concentration in the air leaving the filter. The mass flow of air is calculated using the speed of the fan. Depending on how the air is supplied, it is also possible to determine the mass flow of air by means of the pressure drop across the filter. The accumulated amount of pollutants released from the filter during desorption is calculated by means of the concentration measured by the sensor P₂. Depending on the circumstances it may be necessary to correct the latter concentration, using the concentration measured by the sensor P₁ or a known background concentration.

Alternatively the amount of pollutants contained in the filter is measured by the sensor S, before and after desorption.

The engine control system for regulating the value of λ is adjusted in order to achieve complete combustion and a minimal effect on the value of λ. Said value of λ is monitored by the front λ-probe. Note that the λ-test works mainly for hydrocarbons. Other kinds of pollutants may give a minor or no effect on the value of λ.

### Diagnostics test

III.a If the accumulated amount of pollutants released from the filter is noticeably larger than the adsorbed amount, then an error message is generated.
III.b If the accumulated amount of pollutants released from the filter is noticeably smaller than the adsorbed amount, then an error message is generated.
III.c If the accumulated amount of pollutants released from the filter conforms with the amount adsorbed, but the value of λ changes noticeably when the airflow is released into the engine, then an error message is generated.
III.d The concentration of released pollutants in the flow of air is plotted over time. If the resulting curve differs significantly from a reference curve, then an error message is generated.
III.e If the temperature measured by the sensor T does not reach the minimum required temperature for desorption, then an error message is generated.
III.f The temperature of the filter is continuously measured by the sensor T during the desorption phase and is plotted over time. If the resulting curve differs significantly from a reference curve, then an error message is generated.
III.g Conventional electrical tests are performed on the fan or fans and the valves, to ensure proper operation.

### IV. Counterflow ventilation

Figure 10a shows an arrangement similar to that of Figure 9a during a ventilation cycle using counterflow, where the direction of the air flow is indicated by arrows.

A ventilation cycle usually follows a desorption cycle and is used to ventilate any remaining pollutants out of the system before a subsequent adsorption cycle is resumed. Although the described embodiment delays ventilation until the filter has cooled down below a predetermined temperature, it is also possible to used the ventilation mode to reduce the time taken to cool the filter. As implied above, the air flow during the ventilation mode is directed into the engine.

Counterflow ventilation may also be used for monitoring the filter status in an arrangement using only one pollution sensor. By performing a ventilation cycle at regular intervals, thus reversing the flow through the filter, the single sensor can check that the downstream concentration is zero. If the sensor indicates that the concentration differs from zero, then the filter has been filled to its maximum capacity and requires a desorption.

The ventilation cycle can also follow an adsorption cycle and is used to allow the central processing unit to perform a status check on the pollution sensors following a detected possible fault. If the status check confirms the initial fault signal, then an error message is generated.

### Function after desorption

The direction of flow of the heated air is opposite to the adsorption direction. Before adsorption is resumed it is necessary to lower the temperature of the filter below a predetermined value and to remove any remaining desorbed pollutants from the ventilation conduits. This is done during a ventilation cycle, whereby air at ambient temperature is drawn through the conduits in the same direction as for the desorption cycle during a predetermined period of time. The temperature of the filter can also be determined using a temperature sensor T, or by a calculation of the current temperature, based on'ambient temperature, fan speed and cooling characteristics for the filter.

The direction of flow of the heated air is opposite to the adsorption direction. Hence the sensor P₂ measures the concentration of pollutants in the air entering into the filter, while the sensor P₁ measures the concentration in the air leaving the filter. The mass flow of air is calculated using the speed of the fan. Depending on how the air is supplied, it is also possible to determine the mass flow of air by means of the pressure drop across the filter.

If a ventilation procedure is performed immediately after a desorption, then the concentration measured by the pollution sensor P₁ should be zero or near zero. This fact is used to check and if necessary adjust the reference, or zero level of the sensor P₁.

### Function after or during adsorption phase (filter check)

The direction of flow of the heated air during desorption and a subsequent ventilation is opposite to the adsorption direction. During a ventilation cycle the sensor P₂ measures the concentration of pollutants in the air entering into the filter, while the sensor P₁ measures the concentration in the air leaving the filter. The mass flow of air is calculated using the speed of the fan. Depending on how the air is supplied, it is also possible to determine the mass flow of air by means of the pressure drop across the filter.

If the concentration of pollutants at the sensor P₁ is near zero, or at least considerably less than the concentration of pollutants at the sensor P₂, then the filter is not yet filled to its maximum capacity. If the concentration of pollutants at the sensor P₁ is considerably greater than zero, then the filter is filled to its maximum capacity and a desorption is required.

If only one sensor P₁ is used, it is possible to monitor the status of the filter by switching the arrangement from adsorption to desorption mode, and back again, at regular intervals. The time required for the pollution sensor to determine the status is less than ten seconds, whereby the arrangement is switched back to the adsorption cycle before the filter is heated sufficiently to initiate desorption. If the filter check finds that the filter is full, the arrangement will remain in desorption mode.

A similar filter check function can be achieved by switching to ventilation mode at regular intervals. If the filter check finds that the filter is full, then a desorption mode is initiated.

By calculating the accumulated amount of pollutants in the filter at the point in time when the filter reaches its maximum capacity, the current capacity of the filter can be determined.

### Diagnostics test after desorption

IV.a If the concentration of pollutants measured by the sensor P₁ downstream of the filter is not zero or near zero, then the filter is filled to its maximum capacity. The CPU will initiate a desorption cycle and, if necessary, adapt the current theoretical value for filter capacity. Alternatively, an error message may be generated, in order to perform a sensor check in connection with the above procedure.
IV.b The concentration of pollutants entering the filter during adsorption mode, measured by the sensor P₁, can be compared with the concentration of pollutants entering the filter during desorption mode, measured by the sensor P₂. This allows the function of the sensors P₁ and P₂ to be compared. If the difference between the signal levels of P₁ and P₂ are within a predetermined limit, then an adaption can be performed between the sensors. If the adaption exceeds a predetermined value, then an error message is generated.

Diagnostics test after or during adsorption phase (filter check)
IV.c If the concentration of pollutants measured by the sensor P₁ downstream of the filter is not zero or near zero, then an error message is generated.
IV.d The concentration of pollutants entering the filter during adsorption mode, measured by the sensor P₁, can be compared with the concentration of pollutants entering the filter during desorption mode, measured by the sensor P₂. This allows the function of the sensors P₁ and P₂ to be compared. If the difference between the signal levels of P₁ and P₂ are within a predetermined limit, then an adaption can be performed between the sensors. If the adaption exceeds a predetermined value, then an error message is generated.

### V. Concurrent flow ventilation

Figure 10b shows an arrangement similar to that of Figures 8b and 9b during a ventilation cycle using concurrent flow, where the direction of the air flow is indicated by arrows. The operation of the embodiment according to Figure 10b is substantially the same as for an adsorption cycle as described in connection with Figures 8b and 9b. The main differences are that the filter is no longer being heated, and that the air flow is still directed into the engine.

### Function after desorption

The direction of flow of the heated air during desorption and a subsequent ventilation is the same as the adsorption direction. Before adsorption is resumed it is necessary to lower the temperature of the filter below a predetermined value and to remove any remaining desorbed pollutants from the ventilation conduits. This is done during a ventilation cycle, whereby air at ambient temperature is drawn through the conduits in the same direction as for the desorption cycle during a predetermined period of time. The temperature of the filter can also be determined using a temperature sensor T, or by a calculation of the current temperature, based on ambient temperature, fan speed and cooling characteristics for the filter.

The direction of flow of the heated air is the same as the adsorption direction. Hence the sensor P₁ measures the concentration of pollutants in the air entering into the filter, while the sensor P₂ measures the concentration in the air leaving the filter. The mass flow of air is calculated using the speed of the fan. Depending on how the air is supplied, it is also possible to determine the mass flow of air by means of the pressure drop across the filter.

If a ventilation procedure is performed immediately after a desorption, then the concentration measured by the pollution sensor P₂ should be zero or near zero. This fact is used to check and if necessary adjust the reference, or zero level of the sensor P₂.

### Function after or during adsorption phase (filter check)

The direction of flow of the heated air during desorption and a subsequent ventilation is the same as the adsorption direction. Hence the sensor P₁ measures the concentration of pollutants in the air entering into the filter, while the sensor P₂ measures the concentration in the air leaving the filter.

The mass flow of air is calculated using the speed of the fan. Depending on how the air is supplied, it is also possible to determine the mass flow of air by means of the pressure drop across the filter.

If the concentration of pollutants at the sensor P₂ is near zero, or at least considerably less than the concentration of pollutants at the sensor P₁, then the filter is not yet filled to its maximum capacity. If the concentration of pollutants at the sensor P₂ is considerably greater than zero, then the filter is filled to its maximum capacity and a desorption is required. When the filter reaches its maximum capacity, the downstream concentration will increase and approach the upstream concentration.

By calculating the accumulated amount of pollutants in the filter at the point in time when the filter reaches its maximum capacity, the current capacity of the filter can be determined.

### Diagnostics test after desorption

V.a If the concentration of pollutants measured by the sensor P₂ downstream of the filter is not zero or near zero, then an error message is generated.
V.b The concentration of pollutants entering the filter during concurrent ventilation mode and during adsorption mode are measured by the pollution sensor P₁. This allows for a relative comparison of two signal levels from the sensor P₁. If the difference exceeds a predetermined value, then an error message is generated.

### Diagnostics test after or during adsorption phase (filter check)

V.c If the concentration of pollutants measured by the sensor P₂ downstream of the filter is not zero or near zero, then the filter is filled to its maximum capacity. The CPU will initiate a desorption cycle and, if necessary, adapt the current theoretical value for filter capacity. Alternatively, an error message may be generated, in order to perform a sensor check in connection with the above procedure.
V.d The concentration of pollutants entering the filter during concurrent ventilation mode and during adsorption mode are measured by the pollution sensor P₁. This allows for a relative comparison of two signal levels from the sensor P₁. If the difference exceeds a predetermined value, then an error message is generated.

### VI. Further diagnostic tests

Apart from monitoring the output signals from the various sensors, the central processing unit also controls and performs diagnostic tests on the settings and electrical function of the fan and the controllable valves, such as:
VI.a Function test performed on the fan.
VI.b Control of electrical fault for pollution sensors.

The table set out below lists a number of possible faults detected by the central processing unit, the effect of said fault and one or more diagnostics criteria used by the processing unit to detect each fault. The said criteria in Table 1 are connected to the roman numerals used for each of the above embodiments.

**Table 1**

| **Possible fault** | **Effect caused** | **Diagnostics** |
|---|---|---|
| No airflow for adsorption | Filter not filled | II/III.b, VI.a |
| No airflow for desorption | Filter not emptied | II/III.b |
| Sensor P₁ at constant max. | Filter not emptied | VI.b |
| Sensor P₂ at constant max. | Filter not emptied | VI.b |
| Sensor P₃ at constant max. | Filter not emptied | VI.b |
| Sensor P₁ at constant min. | Filter not emptied | I.a, VI.b |
| Sensor P₂ at constant min. | Filter not emptied | I.a, VI.b |
| Sensor P₃ at constant min. | Filter not emptied | I.a, VI.b |
| Sensor P₁ at constant level | Low value at desorption | I.d, II/IILb, IV/V.b, d |
| Sensor P₂ at constant level | Low value at desorption | I.c,e, II/III.b, IV/V.b,d |
| Sensor P₃ at constant level | Low value at desorption | I.d, II/III.b |
| Accumulated total miscalc. | Released vol.> Calculated vol. | II/III.a |
| Accumulated total miscalc. | Released vol.< Calculated vol. | II/III.b |
| No pollutants adsorbed | Filter not filled | II/III.b, d, IV/V.a, c |
| Adsorption capacity reduced | Filter only partially filled | II/III.b, d, IV/V.a, c |
| No pollutants released | Filter does not emptied | II/III.b, d |
| Leaking adsorbing conduit | Filter not filled | II/III.b, VI.a |
| Leaking desorption conduit | Air dilution, reduced airflow, | II/III.b, c |
| Valve to engine clogged | Filter not emptied | II/III.b |
| Valve to engine leaking | Filter empty, excess air to engine | II/III.b +air adaption |
| Heat exchanger malfunction | Filter not emptied | II/III.b, e, g |
| Filter clogged | Insufficient filling/emptying | II/III.b |
| Compartment valve leak at desorption | Heat loss to compartment Filter not emptied | II/III.b |
| Ambient air valve leak at desorption | Air dilution, red. flow thru' filter Wrong concentration at sensor | II/III.b, c |
| Compartment filter clogged | Filter not filled | II/III.b |
| Ambient air filter clogged | Filter not filled | II/III.b |
| Valve/Fan malfunction | Filter not filled | I.f |

## Claims

1. Method for monitoring operational status of an apparatus for adsorbing pollutants from a source of polluted gas and desorbing said pollutants to an internal combustion engine (1 ), **characterized by** the following steps:
- pollutants are adsorbed in a filter (8, 24) in an adsorbing mode,
- adsorbed pollutants are desorbed to the engine (1 ) during a desorption mode,
- an error signal is generated if the amount desorbed from the filter (8, 24) differs significantly from the adsorbed amount.

2. Method according to claim 1, **characterized in that**
- an accumulated amount of pollutants adsorbed in a filter (8, 24) in the adsorbing mode is compared to a theoretical capacity of the filter (8, 24),
- the desorption mode is initiated when the accumulated amount is near or equal to a predetermined degree of the theoretical capacity,
- the accumulated amount of pollutants desorbed from the filter (8, 24) in the desorbing mode is compared to the accumulated adsorbed amount,
- an error signal is generated if the accumulated desorbed amount differs more than a predetermined amount from the accumulated adsorbed amount.

3. Method according to claim 1, **characterized in that** an error signal is generated if the variation of pollution concentration in the released gas over time differs from predetermined pollution release curve.

4. Method according to claim 2, **characterized in that** a measured value of pollutant concentration in the polluted gas and a calculated value of gas mass flow drawn through the arrangement are used to calculate the accumulated amount of pollutants adsorbed in the filter (8, 24).

5. Method according to claim 4, **characterized in that** a measured value of pollutant concentration in the desorbed gas and a calculated value of gas mass flow is used to determine the amount of pollutant desorbed from the filter (8, 24).

6. Method according to claim 5, **characterized in that** a central processing unit (C₁) is supplied with output signals from a number of sensors (P₁, P₂, P₃, S, T) and performs a number of diagnostic tests during each step, based on said output signals to determine the operational status of the apparatus, whereby an error signal is generated if a component part does not comply with a set of predetermined conditions after at least one diagnostic test.

7. Method according to claim 6, **characterized in that** an additional desorption cycle is initiated if the measured value of pollutant concentration upstream of the filter (8, 24) is zero over a predetermined period of time, whereby a pollution sensor upstream (P₁, P₃) of the filter (8, 24) during the adsorption mode is assumed to malfunction if the desorbed amount of pollutants exceeds the accumulated amount.

8. Method according to claim 6, **characterized in that** measured values of pollutant concentration upstream and downstream of the filter (8, 24) are compared during an adsorption cycle, ,whereby an additional desorption cycle is initiated if the concentration downstream of the filter (8, 24) is not zero or near zero. (I.b,c)

9. Method according to claim 5, **characterized in that** the value for the theoretical capacity of the filter (8, 24) is reset to correspond to the accumulated desorbed amount if the desorbed amount of pollutants is less than the accumulated amount after a number of complete desorption cycles.

10. Method according to claim 9, **characterized in that** a low pass filter with a time constant is used to monitor deterioration of the theoretical capacity over time.

11. Method according to claim 9, **characterized in that** an error signal is generated if the adjusted theoretical capacity drops below a predetermined minimum value.

12. Method according to claim 6, **characterized in that** an error signal is generated if the measured values of pollutant concentration from two independent sensors (P₁, P₃) upstream of the filter (8, 24) differ more than a predetermined amount.

13. Method according to claim 6, **characterized in that** an error signal is generated if the measured value of pollutant concentration from a sensor (P₁, P₂) downstream of the filter (8, 24) is above zero following a desorption cycle.

14. Method according to claim 6, **characterized in that** an error signal is generated if the accumulated desorbed amount exceeds the accumulated adsorbed amount by more than a predetermined amount.

15. Method according to claim 6, **characterized in that** an error signal is generated if the accumulated adsorbed amount exceeds the accumulated desorbed amount by more than a predetermined amount.

16. Method according to claim 6, **characterized in that** a further error signal is generated if the accumulated adsorbed amount is substantially equal to the accumulated desorbed amount, while the pollutants desorbed to the engine (1 ) results in a measured air factor (λ) that differs significantly from a calculated air factor in exhaust gases emitted from the engine (1 ).

17. Method according to claim 6, **characterized in that** an error signal is generated if an actual rate of desorption per unit of time from the filter (8, 24) differs from a predetermined rate of desorption per unit of time.

18. Method according to claim 6, **characterized in that** an error signal is generated if a measured temperature in the filter (8, 24) is below a predetermined required value for desorption.

19. Method according to claim 6, **characterized in that** a desorption cycle is followed by a ventilation cycle, during which one or more sensors (P₁, P₂, P₃) for measuring pollutant concentration downstream of the filter (8, 24) can be calibrated by the central processing unit (C₁).

20. Method according to claim 2, **characterized in that** a desorption cycle is initiated if a measured value of pollutant concentration downstream of the filter (8, 24) is above zero.

21. Method according to claim 2, **characterized in that** a desorption cycle is initiated during an adsorption cycle, whereby the desorption cycle is continued if a measured value of pollutant concentration downstream of the filter (8, 24) is above zero.

22. Method according to claim 2, **characterized in that** a ventilation cycle is initiated during an adsorption cycle, whereby a desorption cycle is initiated if a measured value of pollutant concentration downstream of the filter (8, 24) is above zero.

23. Method according to claim 6, **characterized in that** an error signal is generated if the measured values of pollutant concentration upstream of the filter (8, 24) during an adsorption cycle and upstream of the filter (8, 24) during a desorption cycle differ more than a predetermined amount.

24. Method according to claim 6, **characterized in that** an error signal is generated if a diagnostic test indicates an electrical fault in a sensor, a valve or a fan in the arrangement.

25. Arrangement for monitoring operational status of an apparatus arranged to adsorb pollutants from a source of gas and to desorb said pollutants to an internal combustion engine (1 ), which apparatus includes a filter (8, 24) for adsorbing pollutants, causing gas to flow through the filter (8, 24) during an adsorption cycle, a means for causing gas to flow through the filter (8, 24) into the engine (1 ) during a desorption cycle, a source of heat for heating the filter (8, 24) during said desorption cycle, a number of controllable valves (6, 10, 19, 27, 28, 30, 32) for controlling the direction of the gas flow during different cycles, and a central processing unit (C₁) for controlling said valves (6, 10, 19, 27, 28, 30, 32) in response to input signals from a number of sensors (P₁, P₂, P₃, S, T) and for monitoring the function of the said sensors, **characterized in that**
- a sensor (P₁) for measuring pollution concentration in the gas is positioned upstream of the filter (8, 24), and
- a sensor (P₁, P₂) for measuring pollution concentration in the desorbed gas is positioned downstream of the filter (8, 24), and that
- the central processing unit (C₁) is arranged to use signals from said pollution sensors for monitoring the adsorption of pollutants in the filter (8, 24), to monitor the desorption of pollutants from the filter (8, 24) and to generate an error signal if a desorbed amount differs more than a predetermined amount from the accumulated adsorbed amount

26. Arrangement according to claim 25, **characterized in that** gas is directed through the filter (8, 24) in a first direction during the adsorption cycle.

27. Arrangement according to claim 26, **characterized in that** gas is directed through the filter (8, 24) in a second direction, opposite to the first direction, during the desorption cycle.

28. Arrangement according to claim 27, **characterized in that** a single sensor (P₁) is arranged to measure the pollution concentration during both the adsorption and the desorption cycle.

29. Arrangement according to claim 28, **characterized in that** the central processing unit (C₁) is arranged to calculate an accumulated amount of pollution adsorbed by the filter (8, 24), using the signal from the pollution sensor (P₁) and a known value for gas mass flow during an adsorption cycle.

30. Arrangement according to claim 28, **characterized in that** the central processing unit (C₁) is arranged to calculate an accumulated amount of pollution desorbed from the filter (8, 24), using the signal from the pollution sensor (P₁) and a known value for gas mass flow during a desorption cycle.

31. Arrangement according to claim 28, **characterized in that** a sensor (S) for measuring the accumulated amount of pollutants is provided in the filter (8, 24).

32. Arrangement according to claim 29 or 31, **characterized in that** the central processing unit (C₁) is arranged to compare the accumulated amount of pollution adsorbed by the filter (8, 24) with a theoretical capacity of the filter (8, 24) and to initiate a desorption cycle when the accumulated amount is near or equal to a predetermined degree of the theoretical capacity of the filter (8, 24).

33. Arrangement according to claim 26, **characterized in that** gas is directed through the filter (8, 24) in a second direction, identical to the first direction, during the desorption cycle.

34. Arrangement according to claim 33, **characterized in that** the central processing unit (C₁) is arranged to calculate an accumulated amount of pollution adsorbed by the filter (8, 24), using the signal from the upstream pollution sensor (P₁) and a known value for gas mass flow during an adsorption cycle.

35. Arrangement according to claim 33, **characterized in that** the central processing unit (C₁) is arranged to calculate an accumulated amount of pollution desorbed by the filter (8, 24), using the signal from the downstream pollution sensor (P₂) and a known value for gas mass flow during a desorption cycle.

36. Arrangement according to claim 33, **characterized in that** a sensor (S) for measuring the accumulated amount of pollutants is provided in the filter (8, 24).

37. Arrangement according to claim 34 or 36, **characterized in that** the central processing unit (C₁) is arranged to compare the accumulated amount of pollution adsorbed by the filter (8, 24) with a theoretical capacity of the filter (8, 24) and to initiate a desorption cycle when the accumulated amount is near or equal to a predetermined degree of the theoretical capacity of the filter (8, 24).

38. Arrangement according to claim 25, **characterized in that** a further sensor (P₃) for measuring the concentration of pollutants is provided upstream of the filter (8, 24).

39. Arrangement according to claim 38, **characterized in that** the central processing unit (C₁) is arranged to compare the output signals from the two upstream pollution sensors (P₁, P₃) and generate an error signal if the difference between the output signals exceed a predetermined level.

40. Arrangement according to claim 38, **characterized in that** the two pollution sensors (P₁, P₃) have different sensitivity ranges, which ranges are adapted to the source of the gas.

41. Arrangement according to claim 40, **characterized in that** the central processing unit (C₁) is arranged to select an output signal from one of said sensors (P₁, P₃) depending on the source of the gas upstream of the filter (8, 24).

42. Arrangement according to claim 25, **characterized in that** a desorption cycle is arranged to be initiated for a predetermined period of time during an adsorption cycle, in order to determine the status of the filter (8, 24)

43. Arrangement according to claim 25, **characterized in that** a ventilation cycle is arranged to be performed during an adsorption cycle, in order to determine the status of the filter (8, 24).

44. Arrangement according to claim 25, **characterized in that** a ventilation cycle is arranged to be performed after a desorption cycle, in order to ventilate desorbed pollutants from the apparatus before a subsequent adsorption cycle.

45. Arrangement according to claim 25, **characterized in that** a temperature sensor (T) is provided for measuring the temperature of the filter (8, 24) during desorption.

46. Arrangement according to claim 25, **characterized in that** the source of gas is ambient air.

47. Arrangement according to claim 25, **characterized in that** the source of gas is exhaust from the engine (1 ).
